# EUROPEAN PATENT SPECIFICATION

(11) **EP 4 002 575 B1**
(45) Date of publication and mention of the grant of the patent: **21.05.2025**
(21) Application number: 21163838.2
(22) Date of filing: 19.03.2021
(51) Int. Cl.: H01M 50/507, H01M 50/514, H01M 50/519, H01M 50/54

(54) **DEVICE FOR SOFT-PACKAGED ELECTRIC CORE CONNECTION AND SIGNAL ACQUISITION**
VORRICHTUNG ZUR ELEKTRISCHEN VERBINDUNG VON WEICHGEHÄUSEKERN UND SIGNALERFASSUNG
DISPOSITIF DE CONNEXION DE NOYAU ÉLECTRIQUE À EMBALLAGE SOUPLE ET D'ACQUISITION DE SIGNAL

(30) Priority: 04.11.2020 CN 202022517857 U
(43) Date of publication of application: 25.05.2022
(73) Proprietor: Dongguan Guixiang Insulation Material Co., Ltd, Dongguan, Guangdong (CN)
(72) Inventor: MO, Shiying, Dongguan, Guangdong (CN)
(74) Representative: Ipey

(56) References cited:
- EP-A1- 3 367 469
- WO-A1-2018/065580
- WO-A1-2020/189975
- DE-U1- 202008 012 441

## Description

### BACKGROUND

### Field of Invention

The present application relates to the technical field of electric core connection device, in particular, to a device for soft-packaged electric core connection and signal acquisition.

### Background of the Invention

At present, the battery packages used in new energy vehicles are all composed of multiple sets of electric cores, and connection devices are required to connect between each set of electric cores to realize various series-parallel relationships. In the prior art, the connection devices used in the battery package are installed horizontally, and cannot be installed vertically. Due to the small space of the battery package, it is difficult to disassemble and assemble the connection device, which brings inconvenience to the assembly of the battery package. Therefore, it is necessary to study a solution to solve the above-mentioned problems.

WO2020/189975 discloses a battery module for use as an energy source in various product lines such as mobile devices and electric vehicles. The battery module includes a battery cell stack in which multiple battery cells are stacked. Electrode leads protrude from the battery cell stack. A bus bar is electrically connected to the electrode leads. The bus bar is mounted to a bus bar frame and has a clamp portion and a fixing portion connecting and fixing the clamp portion. The electrode leads are located between the clamp portion of the bus bar. The bus bar frame has an opening, a locking portion being formed above the opening to position an upper end of the clamp portion, and a lower opening portion formed under the opening to position the fixing portion. The locking portion is formed to be stepped above the opening. An upper end of the clamping portion is mounted to a step of the locking portion.

DE202008012441 discloses a battery having a plurality of cells each having positive and negative terminals which are connected to the positive and negative terminals of the other cells by respective clamping devices.

EP3367469 discloses a battery pack comprising a cell group and a bus bar. The cell group includes a plurality of unit cells stacked in a thickness direction with a cell body, which includes a power generation element and has a flat shape, and an electrode tab protruding out from the cell body, and the distal end portions of the electrode tabs are bent along the stacking direction of the unit cells. The bus bar is shaped in a flat plate shape and joined to the distal end portions of the electrode tabs of the unit cells while facing the distal end portions, and electrically connects the electrode tabs of at least two of the unit cells to each other. The battery pack further has a restricting member that is disposed between electrode tabs that are adjacent to each other in the stacking direction of the unit cells, and that restricts the positions of the distal end portions of the electrode tabs in the stacking direction.

WO2018/065580 discloses an energy storage module comprising a plurality of electrochemical cells for storing electric energy and comprising at least one contacting device for electrically contacting the plurality of electrochemical cells. Each of the plurality of electrochemical cells has a first flat connection lug for contacting a first electrode of the respective electrochemical cell and a second flat connection lug for contacting a second electrode of the respective electrochemical cell. The plurality of electrochemical cells are arranged in a stacked formation and form a cell pack such that the first and second flat connection lugs extend outwards from two opposing sides of the cell pack in an at least substantially perpendicular manner. According to the invention, the at least one contacting device is substantially comb-shaped in particular and has a plurality of teeth which are formed and arranged such that a first or second connection lug is received or can be received between two adjacent teeth.

### SUMMARY

In view of this, in order to solve the drawbacks in the prior art, the main objective of the present application is to provide a device for soft-packaged electric core connection and signal acquisition, which may effectively solve the problem of inconvenient disassembly and assembly when the existing connection device is installed horizontally when in use.

To achieve the above objective, the present application adopts the following technical solutions:

A device for soft-packaged electric core connection and signal acquisition includes an insulating body, an FPC and a plurality of contact elastic plates, wherein the insulating body is provided with a plurality of insertion grooves with openings facing downward, and each of the insertion grooves penetrates the left and right sides of the insulating body; the FPC is fixed on the insulating body, and the FPC has a plurality of first connecting portions; the plurality of contact elastic plates are fixed on the insulating body, and each of the contact elastic plates has an elastic contact portion and a second connecting portion that are connected to each other; the elastic contact portion is located in the corresponding insertion groove, and the second connecting portion is conductively connected to the corresponding first connecting portion.

As a preferred solution, a plurality of through grooves are formed through the left and right sides of the insulating body, and the plurality of through grooves are respectively located between the corresponding insertion grooves.

As a preferred solution, each of the contact elastic plates has a plurality of groups of elastic contact portions, each group of the elastic contact portions is located in the corresponding insertion groove, and each group of the elastic contact portions is composed of two elastic contact parts that are integrally formed and connected with each other; two elastic contact parts are respectively located on inner walls of both sides of the insertion groove, and a clamping groove with an opening facing downward is formed between the two elastic contact parts.

As a preferred solution, the second connecting portion is plate-shaped, and a top end of each group of the elastic contact portions is welded and fixed to the second connecting portion.

As a preferred solution, a top surface of the insulating body is recessed with a plurality of recesses, the plurality of first connecting portions are respectively located in the corresponding recesses, and the plurality of second connecting portions are also respectively located in the corresponding recesses.

As a preferred solution, the plurality of contact elastic plates is all laterally clamped on the insulating body.

As a preferred solution, the FPC is arranged around the top end of the insulating body.

Compared with the prior art, the present application has obvious advantages and beneficial effects. Specifically, it can be known from the above technical solutions that:

the openings of the insertion grooves are configured downward and to penetrate the left and right sides of the insulating body, so that the product can be mounted and used in a vertical installation mode, and is not limited by the space of the battery package, thereby facilitating disassembling the product and facilitating assembling the battery package.

### BRIEF DESCRIPTION OF THE DRAWINGS

Fig. 1 is a three-dimensional view of assembly of a preferred embodiment of the present application;
Fig. 2 is an exploded view of a preferred embodiment of the present application;
Fig. 3 is a cross-section view of a preferred embodiment of the present application;
Fig. 4 is a three-dimensional view showing a status of use of a preferred embodiment of the present application.

### References in the Figures:

| | | | |
|---|---|---|---|
| 10. | Insulating body | 11. | Insertion groove |
| 12. | Through groove | 13. | Recess |
| 20. | FPC | 21. | First connecting portion |
| 30. | Contact elastic plate | 31. | Elastic contact portion |
| 32. | Second connecting portion | 301. | Clamp groove |
| 40. | Electrical core | 41. | Electrode |

### DETAILED DESCRIPTION OF THE EMBODYMENTS

In order to explain the structural features and effects of the present application more clearly, the present application will be described in detail below with reference to the drawings and specific embodiments.

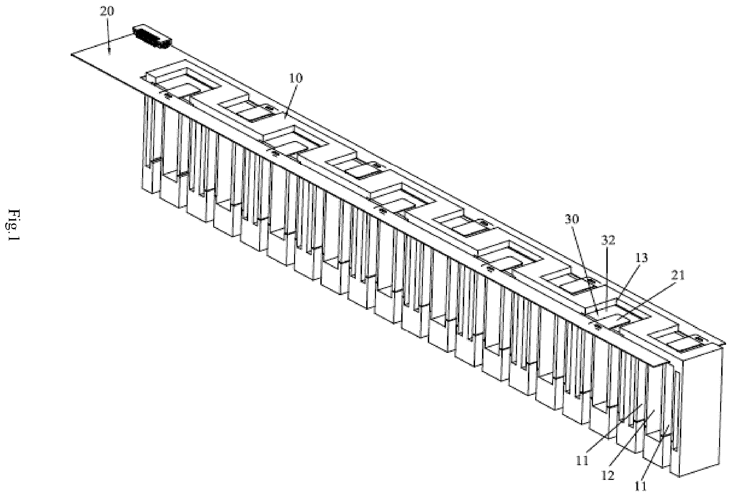

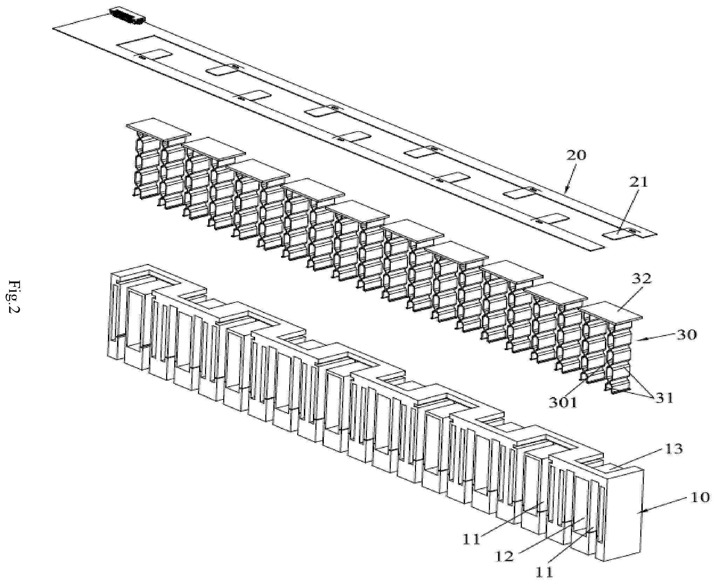

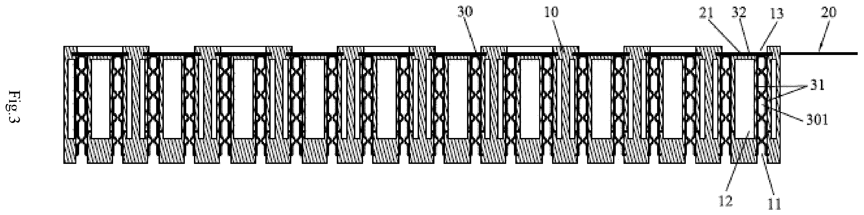

With reference to Figs. 1 to 4, a specific structure of a preferred embodiment of the present application is shown, which includes an insulating body 10, an FPC 20, and a plurality of contact elastic plates 30.

The insulating body 10 is provided with a plurality of insertion grooves 11 with openings facing downwardly, and each of the insertion grooves 11 penetrates the left or right sides of the insulating body 10; in the present embodiment, the insulating body 10 is made of plastic material, which is a long strip, and a plurality of insertion grooves 11 are arranged at intervals in the front and rear; and a plurality of through grooves 12 are formed through the left and right sides of the insulating body 10, the plurality of through grooves 12 are respectively located between the corresponding insertion grooves 11, and the top surface of the insulating body 10 is recessed with a plurality of recesses 13.

The FPC 20 is fixed on the insulating body 10, and the FPC 20 has a plurality of first connecting portions 21; in the present embodiment, the plurality of first connecting portions 21 are respectively located in the corresponding recesses 13, and the first connecting portion 21 is a nickel sheet, which is welded and connected to the FPC 20; and the FPC 20 is arranged around the top end of the insulating body 10.

The plurality of contact elastic plates 30 are fixed on the insulating body 10, and each of the contact elastic plates 30 has an elastic contact portion 31 and a second connecting portion 32 that are connected to each other; the elastic contact portion 31 is located in the corresponding insertion groove 11, and the second connecting portion 32 is conductively connected to the corresponding first connection portion 21. In the present embodiment, the plurality of contact elastic plates 30 are all laterally clamped on the insulating body 10; each of the contact elastic plates 30 has a plurality of groups of elastic contact portions 31, each group of the elastic contact portions 31 is located in the corresponding insertion groove 11, and each group of the elastic contact portions 31 is composed of two elastic contact parts that are integrally formed and connected with each other; two elastic contact parts are respectively located on inner walls of both sides of the insertion groove 11, and a clamping groove 301 with an opening facing downwardly is formed between the two elastic contact parts; the second connecting portion 32 is plate-shaped, and the top end of each group of the elastic contact portions 31 is welded and fixed to the second connecting portion 32; the plurality of second connecting portions 32 are also located in the corresponding recesses 13 respectively, and the aforementioned plurality of first connecting portions 21 are superimposed on the corresponding second connecting portions 32 by welding and conducting.

The process of assembling the present embodiment is described in detail as follows:
first, the insulating body 10 and the plurality of contact elastic plates 30 are formed and manufactured; then, the plurality of contact elastic plates 30 are respectively clamped and fixed on the insulating body 10; and then, the FPC 20 is arranged on the insulating body 10, and the plurality of first connecting portions 21 are overlapped with the corresponding second connecting portions 32 by welding and conducting.

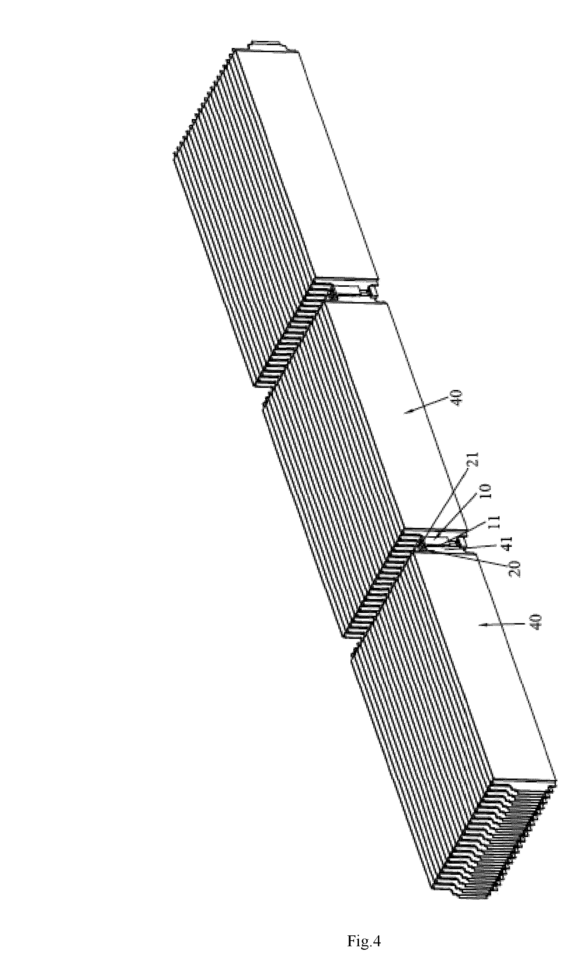

When in use, as shown in Fig. 4, the plurality of groups of electric cores 40 are arranged horizontally at intervals; then, the product is placed between two adjacent groups of electric cores 40 and inserted from top to bottom, so that an electrode 41 of each of the electric cores 40 is respectively clamped into the corresponding insertion groove 11 and clamped by the clamp groove 301 to be conductively connected to the corresponding elastic contact portion 31, the two adjacent electric cores 40 are connected in parallel by the contact elastic plates 30, and then the FPC 20 is used to collect signals.

The key points of the design of the present application are that the openings of the insertion grooves are configured downward and to penetrate the left and right sides of the insulating body, so that the product can be mounted and used in a vertical installation mode, and is not limited by the space of the battery package, thereby facilitating disassembling the product and facilitating assembling the battery package.

## Claims

1. A device for soft-packaged electric core connection and signal acquisition, comprising an insulating body, an FPC and a plurality of contact elastic plates, wherein the insulating body is provided with a plurality of insertion grooves with openings facing downward, and each of the insertion grooves penetrates the left and right sides of the insulating body; the FPC is fixed on the insulating body, and the FPC has a plurality of first connecting portions; the plurality of contact elastic plates are fixed on the insulating body, and each of the contact elastic plates has a elastic contact portion and a second connecting portion that are connected to each other; the elastic contact portion is located in the corresponding insertion groove, and the second connecting portion is conductively connected to the corresponding first connecting portion.

2. The device for soft-packaged electric core connection and signal acquisition according to claim 1, wherein a plurality of through grooves is formed through the left and right sides of the insulating body, and the plurality of through grooves are respectively located between the corresponding insertion grooves.

3. The device for soft-packaged electric core connection and signal acquisition according to claim 1, wherein each of the contact elastic plates has a plurality of groups of elastic contact portions, each group of the elastic contact portions is located in the corresponding insertion groove, and each group of the elastic contact portions is composed of two elastic contact portions that are integrally formed and connected with each other; two elastic contact portions are respectively located on inner walls of both sides of the insertion groove, and a clamping groove with an opening facing downward is formed between the two elastic contact portions.

4. The device for soft-packaged electric core connection and signal acquisition according to claim 3, wherein the second connecting portion is plate-shaped, and a top end of each group of the elastic contact portions is welded and fixed to the second connecting portion.

5. The device for soft-packaged electric core connection and signal acquisition according to claim 1, wherein a top surface of the insulating body is recessed with a plurality of recesses, the plurality of first connecting portions are respectively located in the corresponding recesses, and the plurality of second connecting portions are also respectively located in the corresponding recesses.

6. The device for soft-packaged electric core connection and signal acquisition according to claim 1, wherein the plurality of contact elastic plates are all laterally clamped on the insulating body.

7. The device for soft-packaged electric core connection and signal acquisition according to claim 1, wherein the FPC is arranged around a top end of the insulating body.

## Patentansprüche

1. Vorrichtung zur elektrischen Verbindung eines Weichgehäusekerns und Signalerfassung, umfassend einen Isolierkörper, eine FPC und eine Vielzahl von elastischen Kontaktplatten, wobei der Isolierkörper mit einer Vielzahl von Einstecknuten mit nach unten weisenden Öffnungen versehen ist und jede der Einstecknuten die linke und die rechte Seite des Isolierkörpers durchringt; die FPC an dem Isolierkörper befestigt ist und die FPC eine Vielzahl von ersten Verbindungsabschnitten aufweist; die Vielzahl von elastischen Kontaktplatten an dem Isolierkörper befestigt ist und jede der elastischen Kontaktplatten einen elastischen Kontaktabschnitt und einen zweiten Verbindungsabschnitt aufweist, die miteinander verbunden sind; sich der elastische Kontaktabschnitt in der entsprechenden Einstecknut befindet und der zweite Verbindungsabschnitt mit dem entsprechenden ersten Verbindungsabschnitt leitend verbunden ist.

2. Vorrichtung zur elektrischen Verbindung eines Weichgehäusekerns und Signalerfassung nach Anspruch 1, wobei eine Vielzahl von Durchgangsnuten durch die linke und die rechte Seite des Isolierkörpers ausgebildet ist und sich die Vielzahl von Durchgangsnuten jeweils zwischen den entsprechenden Einstecknuten befinden.

3. Vorrichtung zur elektrischen Verbindung eines Weichgehäusekerns und Signalerfassung nach Anspruch 1, wobei jede der elastischen Kontaktplatten eine Vielzahl von Gruppen von elastischen Kontaktabschnitten aufweist, sich jede Gruppe der elastischen Kontaktabschnitte in der entsprechenden Einstecknut befindet und jede Gruppe der elastischen Kontaktabschnitte aus zwei elastischen Kontaktabschnitten zusammengesetzt ist, die einstückig ausgebildet und miteinander verbunden sind; sich zwei elastische Kontaktabschnitte jeweils an Innenwänden beider Seiten der Einstecknut befinden und eine Klemmnut mit einer nach unten weisenden Öffnung zwischen den zwei elastischen Kontaktabschnitten ausgebildet ist.

4. Vorrichtung zur elektrischen Verbindung eines Weichgehäusekerns und Signalerfassung nach Anspruch 3, wobei der zweite Verbindungsabschnitt plattenförmig ist und ein oberes Ende jeder Gruppe der elastischen Kontaktabschnitte mit dem zweiten Verbindungsabschnitt verschweißt und daran befestigt ist.

5. Vorrichtung zur elektrischen Verbindung eines Weichgehäusekerns und Signalerfassung nach Anspruch 1, wobei eine obere Fläche des Isolierkörpers mit einer Vielzahl von Ausnehmungen ausgenommen ist, sich die Vielzahl von ersten Verbindungsabschnitten jeweils in den entsprechenden Ausnehmungen befinden und sich die Vielzahl von zweiten Verbindungsabschnitten ebenfalls jeweils in den entsprechenden Ausnehmungen befinden.

6. Vorrichtung zur elektrischen Verbindung eines Weichgehäusekerns und Signalerfassung nach Anspruch 1, wobei die Vielzahl von elastischen Kontaktplatten alle seitlich an dem Isolierkörper geklemmt sind.

7. Vorrichtung zur elektrischen Verbindung eines Weichgehäusekerns und Signalerfassung nach Anspruch 1, wobei die FPC um ein oberes Ende des Isolierkörpers herum angeordnet ist.

## Revendications

1. Dispositif pour la connexion de noyaux électriques à emballage souple et l'acquisition de signal, comprenant un corps isolant, un circuit imprimé souple (FPC pour « Flexible Print Circuit ») et une pluralité de plaques élastiques de contact, dans lequel le corps isolant est pourvu d'une pluralité de rainures d'insertion avec des ouvertures en regard vers le bas, et chacune des rainures d'insertion pénètre dans les côtés gauche et droit du corps isolant ; le FPC est fixé sur le corps isolant, et le FPC comporte une pluralité de premières portions de connexion ; la pluralité de plaques élastiques de contact sont fixées sur le corps isolant, et chacune des plaques élastiques de contact comporte une portion de contact élastique et une seconde portion de connexion qui sont connectées l'une à l'autre ; la portion de contact élastique est située dans la rainure d'insertion correspondante, et la seconde portion de connexion est connectée de manière conductrice à la première portion de connexion correspondante.

2. Dispositif pour la connexion de noyaux électriques à emballage souple et l'acquisition de signal selon la revendication 1, dans lequel une pluralité de rainures traversantes est formée à travers les côtés gauche et droit du corps isolant, et la pluralité de rainures traversantes sont respectivement situées entre les rainures d'insertion correspondantes.

3. Dispositif pour la connexion de noyaux électriques à emballage souple et l'acquisition de signal selon la revendication 1, dans lequel chacune des plaques élastiques de contact comporte une pluralité de groupes de portions de contact élastiques, chaque groupe des portions de contact élastiques est situé dans la rainure d'insertion correspondante, et chaque groupe des portions de contact élastiques est composé de deux portions de contact élastiques qui sont formées d'un seul tenant et connectées l'une à l'autre ; deux portions de contact élastiques sont respectivement situées sur des parois internes des deux côtés de la rainure d'insertion, et une rainure de serrage avec une ouverture en regard vers le bas est formée entre les deux portions de contact élastiques.

4. Dispositif pour la connexion de noyaux électriques à emballage souple et l'acquisition de signal selon la revendication 3, dans lequel la seconde portion de connexion est en forme de plaque, et une extrémité haute de chaque groupe des portions de contact élastiques est soudée et fixée à la seconde portion de connexion.

5. Dispositif pour la connexion de noyaux électriques à emballage souple et l'acquisition de signal selon la revendication 1, dans lequel une surface haute du corps isolant est évidée avec une pluralité d'évidements, la pluralité de premières portions de connexion sont respectivement situées dans les évidements correspondants, et la pluralité de secondes portions de connexion sont également respectivement situées dans les évidements correspondants.

6. Dispositif pour la connexion de noyaux électriques à emballage souple et l'acquisition de signal selon la revendication 1, dans lequel la pluralité de plaques élastiques de contact sont toutes serrées latéralement sur le corps isolant.

7. Dispositif pour la connexion de noyaux électriques à emballage souple et l'acquisition de signal selon la revendication 1, dans lequel le FPC est agencé autour d'une extrémité haute du corps isolant.
